# EUROPÄISCHE PATENTANMELDUNG

(11) **EP 2 234 032 A2**
(43) Veröffentlichungstag der Anmeldung: **29.09.2010**
(21) Anmeldenummer: 10002678.0
(22) Anmeldetag: 15.03.2010
(51) Int. Cl.: G06K 7/00, G07C 1/00, G07B 15/00, G07C 9/02, G07F 7/08

(54) **Leseeinrichtung für eine Zugangskontrollvorrichtung**

(30) Priorität: 23.03.2009 DE 202009003939 U
(71) Anmelder: SkiData AG, 5083 Grödig/Salzburg (AT)
(72) Erfinder: Ponert, Gregor, 5020 Salzburg (AT); Lang, Christian, 5120 Haigermoos (AT)
(74) Vertreter: Karakatsanis, Georgios

(57) **Zusammenfassung**

Eine Leseeinrichtung (5) für eine Zugangskontrollvorrichtung (1), weist eine Ausleseeinrichtung (6) für unterschiedlich ausgeführte berührungslos auslesbare Zutrittsberechtigungen auf.

## Beschreibung

Die Erfindung bezieht sich auf eine Leseeinrichtung für eine Zugangskontrollvorrichtung gemäß dem Oberbegriff des Schutzanspruchs 1.

Zugangskontrollvorrichtungen, beispielsweise für Personen, sind aus dem Stand der Technik bekannt. Sie umfasst in der Regel ein Sperrorgan, welches von einem über eine Steuerung gesteuerten Aktuator betätigt wird, um einer Person bzw. einem Fahrzeug zu ermöglichen, ein Gebäude bzw. ein Gelände zu betreten oder zu verlassen sowie eine Leseeinrichtung für eine Zugangsberechtigung, wobei bei einer gültigen gelesenen Zugangsberechtigung das Sperrorgan von einer Sperrstellung in eine Freistellung überführt wird.

Die Leseeinrichtung kann nach dem Stand der Technik als Leseeinrichtung für Magnetkarten mit darauf abgelegter Zugangsberechtigung oder als Leseeinrichtung für berührungslos auslesbare Zutrittsberechtigungen, beispielsweise als Barcode-Scanner oder RFID- bzw. NFC-Leser ausgeführt sein. Des weiteren sind Leseeinrichtungen bekannt, welche zur Überprüfung einer Zugangsberechtigung biometrische Merkmale verwenden, wie beispielsweise Fingerabdrücke oder Venenmuster.

In diesem Zusammenhang sind Leseeinrichtungen bekannt, welche das Einlesen von unterschiedlich ausgeführten Zugangsberechtigungen ermöglichen; beispielsweise ist es möglich, RFID-Zugangsberechtigungen und Zugangsberechtigungen umfassend einen Barcode an einer Zugangskontrolleinrichtung zu verwenden, wobei zu diesem

Zweck die Leseeinrichtung der Zugangskontrolleinrichtung unterschiedliche Einsteckschlitze bzw. Lesefenster für die Zugangsberechtigungen aufweist, sodass in Abhängigkeit von der Art der Zugangsberechtigung unterschiedliche Auslesepositionen bzw. Ausleseeinrichtungen vorgesehen sind.

Dies kann in dem Nachteil resultieren, dass ein Benutzer seine Zugangsberechtigung in unterschiedliche Auslesepositionen bringt bis seine Zugangsberechtigung in die entsprechende, geeignete Ausleseposition gebracht wird, da ein Benutzer oft nicht in der Lage ist, die Art der Zugangsberechtigung zu erkennen, um diese auf Anhieb in die richtige Ausleseposition zu bringen bzw. in die richtige Ausleseeinrichtung der Leseeinrichtung zu führen. Dadurch entstehen signifikante Verzögerungen, die auch zu einer negative Beeinflussung der Benutzerzufriedenheit führen.

Der vorliegenden Erfindung liegt daher die Aufgabe zugrunde, eine Leseeinrichtung für eine Zugangskontrollvorrichtung anzugeben, durch die Zutrittsberechtigungen unterschiedlicher Art ausgelesen werden können, mit der die Ergonomie und die Benutzerfreundlichkeit im Vergleich zu Leseeinrichtungen nach dem Stand der Technik erhöht wird.

Diese Aufgabe wird durch die Merkmale des Schutzanspruchs 1 gelöst. Weitere erfindungsgemäße Ausgestaltungen und Vorteile gehen aus den Unteransprüchen hervor.

Demnach wird eine Leseeinrichtung für eine Zugangskontrollvorrichtung vorgeschlagen, welche lediglich eine Ausleseeinrichtung für unterschiedlich ausgeführte berührungslos auslesbare Zutrittsberechtigungen sowie optional für auf biometrischen Merkmalen basierende Zutrittsberechtigungen aufweist.

Gemäß einer ersten Ausführungsform der Erfindung weist die erfindungsgemäße Leseeinrichtung als Ausleseeinrichtung ein Auslesefach auf, in dessen obere und/oder untere Fläche ein Barcode-Scanner und in dessen untere und/oder obere Fläche ein RFID- bzw. NFC-Leser integriert ist. Gemäß einer Weiterbildung der Erfindung kann alternativ oder zusätzlich zu dieser Ausgestaltung ein Barcode - Scanner und/oder ein RFID- bzw. NFC-Leser in zumindest eine der Seitenflächen des Auslesefachs integriert sein.

Die Barcode-Scanner können als Barcode - Scanner für ein-und zweidimensionale Barcodes ausgeführt sein und auch zum Auslesen von auf einem Display eines Mobiltelefons angezeigten Barcodes geeignet sein.

Im Rahmen einer vorteilhaften Weiterbildung der Erfindung können in die untere Fläche des Auslesefachs Biometrie-Scanner integriert sein; beispielsweise kann in die untere Fläche des Auslesefachs ein Fingerabdruck- und/oder Venen - Scanner integriert sein.

Gemäß einer weiteren Ausführungsform der Erfindung kann in das Auslesefach eine Einrichtung zur Stimmenerkennung und/oder eine Einrichtung zur DNA-Analyse und/oder ein weiteres beliebiges Biometrie-Scan System integriert sein.

Ferner kann die Leseeinrichtung und insbesondere das Auslesefach einen Iris - Scanner, ein 3D-Gesichtsvermessungssystem, eine 3D-Kamera und/oder einen 3D - Scanner aufweisen.

Im Rahmen einer besonderes vorteilhaften Ausführungsform der Erfindung kann in zumindest eine der Flächen des Auslesefachs ein Magnetstreifenleser integriert sein.

Des weiteren kann erfindungsgemäß vorgesehen sein, dass das Auslesefach als durchgehendes Fach, beispielsweise als Rohrabschnitt mit rechteckigem Querschnitt ausgeführt ist, wobei das eine Ende des Rohrabschnitts einer ersten Durchgangsrichtung und das andere Ende der zweiten Durchgangsrichtung zugewandt bzw. zugeordnet ist, sodass das Auslesen der Zutrittsberechtigungen von zwei Seiten aus erfolgen kann.

Diese Ausführungsform ist insbesondere für Zugangskontrollvorrichtungen in beiden Durchgangsrichtungen geeignet, da in diesem Fall das aus dem Stand der Technik bekannte und mit erhöhten Herstellungs- und Montagekosten verbundene Verschwenken der Leseeinrichtung entsprechend einer Einlass- oder Auslassposition entfällt. Insbesondere kann eine derartig ausgeführte Leseeinrichtung für zwei parallel zueinander und in jeweils entgegengesetzter Richtung verlaufende Zugangsspuren verwendet werden, wodurch in vorteilhafter Weise lediglich eine Leseeinrichtung für zwei Zugangsspuren benötigt wird.

Eine derartig ausgeführte Leseeinrichtung kann demnach auch als gemeinsame Leseeinrichtung von zwei nebeneinander angeordneten Zugangskontrollvorrichtungen oder als Leseeinrichtung einer Zugangskontrollvorrichtung in beiden Durchgangsrichtungen verwendet werden, wobei zur Erkennung der gewünschten Zugangsrichtung zumindest ein Sensor vorgesehen sein kann, welcher die Position einer sich dem Sperrorgan nähernden Person erfasst. Dadurch kann anhand der Position der sich dem jeweiligen Sperrorgan nähernden Person die Software der Leseeinrichtung umkonfiguriert werden, um entsprechend der Position der Person in Bezug auf das Sperrorgan Einlass- bzw. Auslass zu gewähren.

Dieser zumindest eine Sensor kann beispielsweise als kapazitiver Sensor ausgebildet sein, der in der Zugangsspur jeder Durchgangskontrollvorrichtung angeordnet ist. Alternativ dazu kann der Sensor als Lichtschranke, als Ultraschallsensor, als Radarsensor, als optoelektronischer Sensor oder als 2D- oder 3D - Kamera ausgeführt sein.

Die erfindungsgemäße Leseeinrichtung kann auch eine Displayeinrichtung aufweisen, welche Informationen für den Benutzer und/oder animierte Pfeile, die den Benutzer zum Auslesefach führen, anzeigen kann. Die animierten Pfeile können auch unabhängig von einer Displayeinrichtung vorgesehen sein.

Für den Fall, dass das Auslesefach als durchgehendes Fach ausgeführt ist, umfasst die erfindungsgemäße Leseeinrichtung vorzugsweise zwei Display-Einrichtungen, wobei jede Display-Einrichtung einer Durchgangsrichtung zugeordnet ist.

Ferner kann die Leseeinrichtung eine Kamera aufweisen, welche einer Zuordnung von Zugangsberechtigungen zu einem Gesicht oder der Gesichtserkennung oder der Überwachung der Zugangskontrollvorrichtung dient. Für den Fall, dass das Auslesefach als durchgehendes Fach ausgeführt ist, umfasst die erfindungsgemäße Leseeinrichtung vorzugsweise zwei Kameras, die jeweils einer Durchgangsrichtung zugeordnet sind.

Die hier vorgestellte Leseeinrichtung ist sowohl für Durchgangskontrollvorrichtungen für Personen als auch für Durchgangskontrollvorrichtungen für Kraftfahrzeuge geeignet; durch die erfindungsgemäße Konzeption wird die Benutzerfreundlichkeit erhöht, da zum Auslesen aller gängigen Zutrittsberechtigungen lediglich eine Ausleseeinrichtung vorgesehen ist.

Die Erfindung wird im Folgenden anhand der beigefügten Figuren beispielhaft näher erläutert. Es zeigen:
Figur 1: Eine perspektivische Ansicht einer Zugangskontrollvorrichtung umfassend eine erfindungsgemäße Leseeinrichtung; und
Figur 2: Eine schematische perspektivische Ansicht einer besonders vorteilhaften Ausführungsform einer erfindungsgemäßen Leseeinrichtung, bei der das Auslesefach als durchgehendes Fach ausgeführt ist, wobei das eine Ende des Fachs einer ersten Durchgangsrichtung und das andere Ende der zweiten Durchgangsrichtung zugewandt bzw. zugeordnet ist.

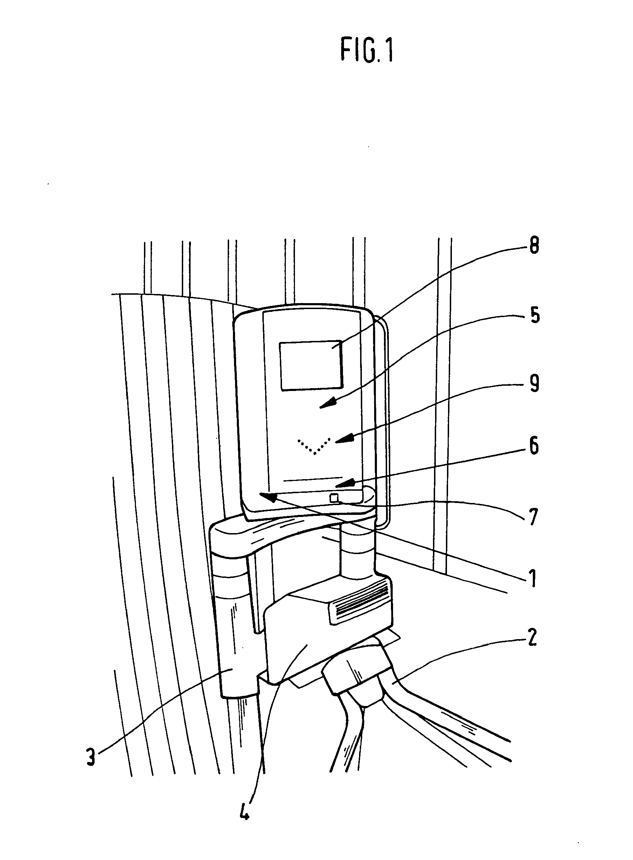

In der beigefügten Figur 1 ist eine Zugangskontrollvorrichtung 1 dargestellt, welche ein Sperrorgan 2 zum Sperren des Zugangs aufweist, das von einem nicht dargestellten Elektromotor als Aktuator angetrieben werden kann.

Ferner weist die Zugangskontrollvorrichtung 1 ein Gestell 3 mit einem Gehäuse 4 auf, in dem der Aktuator, das Antriebsgetriebe und die elektronische Steuerung der Zugangskontrollvorrichtung 1 angeordnet sind. Auf dem Gestell 3 ist eine Leseeinrichtung 5 für die Zugangsberechtigungen angeordnet, welche gemäß der Erfindung lediglich eine Ausleseeinrichtung 6 für unterschiedlich ausgeführte berührungslos auslesbare Zutrittsberechtigungen sowie für auf biometrischen Merkmalen basierende Zutrittsberechtigungen aufweist.

Hierbei ist die Ausleseeinrichtung 6 als Auslesefach ausgebildet, in dessen obere und/oder untere Fläche ein Barcode-Scanner und in dessen untere und/oder obere Fläche ein RFID- bzw. NFC-Leser integriert ist.

Vorzugsweise ist in die obere Fläche ein Barcode - Scanner und in die untere Fläche ein RFID- bzw. NFC - Leser integriert. Bei der gezeigten Ausführungsform ist in die untere Fläche des Auslesefachs ein Fingerabdruck-Scanner 7 integriert.

Wie aus Figur 1 zu entnehmen, umfasst die Leseeinrichtung 5 eine Displayeinrichtung 8 zum Anzeigen von Informationen sowie animierte Pfeile 9 auf, die die Aufmerksamkeit des Benutzers auf das Auslesefach der Leseinrichtung richten.

Im Rahmen weiterer Ausführungsformem der Erfindung kann die Leseeinrichtung drehbar gelagert sein und manuell oder mittels eines Antriebs verschwenkbar ausgeführt sein.

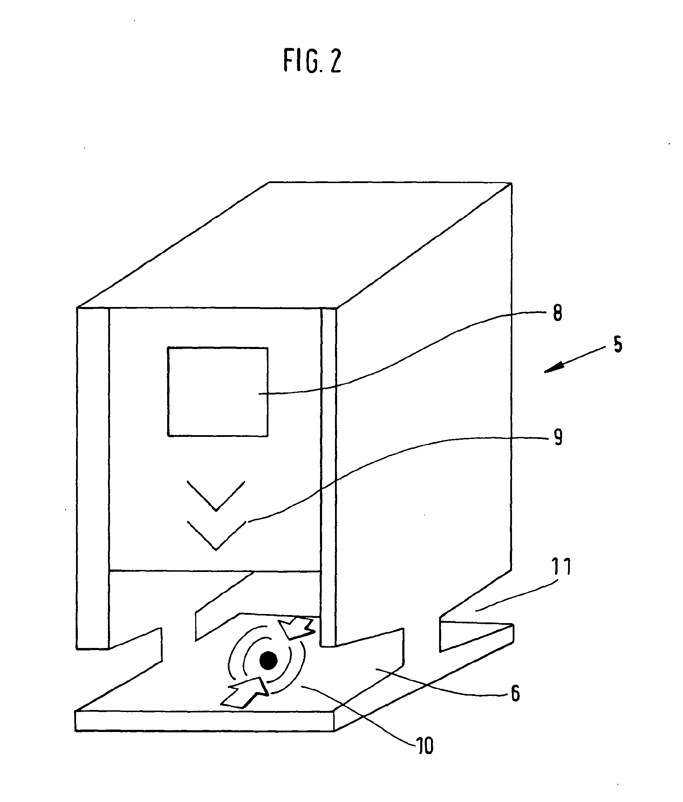

Gegenstand der Figur 2 ist eine besonders vorteilhafte Ausführungsform einer Leseeinrichtung 5, bei der das Auslesefach 6 als durchgehendes Fach ausgeführt ist, wobei das eine Ende 10 des durchgehenden Fachs einer ersten Durchgangsrichtung und das andere Ende 11 der zweiten Durchgangsrichtung zugewandt bzw. zugeordnet ist, sodass das Auslesen der Zutrittsberechtigungen von zwei Seiten aus, d.h. wahlweise in Ein- und Ausgangsrichtung erfolgen kann, ohne die Notwendigkeit, zu diesem Zweck die Leseeinrichtung 5 zu verschwenken.

Auch die in Figur 2 gezeigte Leseeinrichtung 5 umfasst eine Displayeinrichtung 8 zum Anzeigen von Informationen sowie animierte Pfeile 9 auf, welche die Aufmerksamkeit des Benutzers auf das Auslesefach 6 der Leseinrichtung 5 richten.

## Patentansprüche

1. Leseeinrichtung (5) für eine
Zugangskontrollvorrichtung (1), **dadurch gekennzeichnet, dass** sie eine Ausleseeinrichtung (6) für unterschiedlich ausgeführte berührungslos auslesbare Zutrittsberechtigungen aufweist.

2. Leseeinrichtung (5) für eine
Zugangskontrollvorrichtung (1), nach Anspruch 1, **dadurch gekennzeichnet, dass** die Ausleseeinrichtung (6) als Auslesefach ausgeführt ist, in dessen obere und/oder untere Fläche ein Barcode-Scanner und in dessen untere und/oder obere Fläche ein RFID- bzw. NFC-Leser integriert ist.

3. Leseeinrichtung (5) für eine
Zugangskontrollvorrichtung (1), nach Anspruch 1 oder 2, **dadurch gekennzeichnet, dass** in zumindest eine der Seitenflächen des Auslesefachs ein Barcode - Scanner und/oder ein RFID- bzw. NFC-Leser integriert ist.

4. Leseeinrichtung (5) für eine
Zugangskontrollvorrichtung (1), nach Anspruch 1, 2 oder 3, **dadurch gekennzeichnet, dass** in die untere Fläche des Auslesefachs zumindest ein Biometrie-Scanner integriert ist.

5. Leseeinrichtung (5) für eine
Zugangskontrollvorrichtung (1), nach Anspruch 4, **dadurch gekennzeichnet, dass** in die untere Fläche des Auslesefachs ein Fingerabdruck- und/oder ein Venen - Scanner (7) und/oder eine Einrichtung zur Stimmenerkennung und/oder eine Einrichtung zur DNA-Analyse und/oder ein weiteres Biometrie-Scan - System integriert ist.

6. Leseeinrichtung (5) für eine
Zugangskontrollvorrichtung (1), nach einem der vorangehenden Ansprüche, **dadurch gekennzeichnet, dass** in zumindest eine der Flächen des Auslesefachs ein Magnetstreifenleser integriert ist.

7. Leseeinrichtung (5) für eine
Zugangskontrollvorrichtung (1), nach einem der vorangehenden Ansprüche, **dadurch gekennzeichnet, dass** das Auslesefach als durchgehendes Fach ausgeführt ist, wobei das eine Ende (10) des durchgehenden Fachs einer ersten Durchgangsrichtung und das andere Ende (11) der zweiten Durchgangsrichtung zugewandt bzw. zugeordnet ist sodass das Auslesen der Zutrittsberechtigungen von zwei Seiten aus erfolgen kann.

8. Leseeinrichtung (5) für eine
Zugangskontrollvorrichtung (1), nach einem der vorangehenden Ansprüche, **dadurch gekennzeichnet, dass** sie eine Displayeinrichtung (8) aufweist, welche Informationen für den Benutzer und/oder animierte Pfeile, die den Benutzer zum Auslesefach führen, anzeigen kann.

9. Leseeinrichtung (5) für eine
Zugangskontrollvorrichtung (1), nach Anspruch 7, **dadurch gekennzeichnet, dass** sie zwei Displayeinrichtungen (8) aufweist, wobei jede Display-Einrichtung einer Durchgangsrichtung zugeordnet ist.

10. Leseeinrichtung (5) für eine
Zugangskontrollvorrichtung (1), nach Anspruch 7 oder 9, **dadurch gekennzeichnet, dass** sie als gemeinsame Leseeinrichtung von zwei nebeneinander angeordneten Zugangskontrollvorrichtungen oder als Leseeinrichtung einer Zugangskontrollvorrichtung in beiden Durchgangsrichtungen verwendbar ist, wobei zur Erkennung der gewünschten Zugangsrichtung zumindest ein Sensor vorgesehen ist, welcher die Position einer sich dem jeweiligen Sperrorgan nähernden Person erfasst, wobei anhand der Position der sich dem Sperrorgan nähernden Person die Software der Leseeinrichtung (5) umkonfigurierbar ist, um entsprechend der Position der Person in Bezug auf das Sperrorgan Einlass- bzw. Auslass zu gewähren.
